# EUROPÄISCHE PATENTANMELDUNG

(11) **EP 4 629 356 A1**
(43) Veröffentlichungstag der Anmeldung: **08.10.2025**
(21) Anmeldenummer: 25160137.3
(22) Anmeldetag: 26.02.2025
(51) Int. Cl.: H01M 8/043, H01M 8/04746, H01M 8/0662, H01M 8/04119, H01M 8/04089, H01M 8/10

(54) **BRENNSTOFFZELLENSYSTEM UND VERFAHREN ZUM BETREIBEN EINES BRENNSTOFFZELLENSYSTEMS**

(30) Priorität: 04.04.2024 DE 102024109374
(71) Anmelder: Purem GmbH, 66539 Neunkirchen (DE)
(72) Erfinder: Gaiser, Gerd, Reutlingen (DE); Lehr, Tobias, Esslingen (DE); Weller, Bernd, Durlangen (DE); Birgler, Markus, Wernau (DE)
(74) Vertreter: Ruttensperger Lachnit Trossin Gomoll

(57) **Zusammenfassung**

Ein Brennstoffzellensystem, insbesondere für ein Fahrzeug, umfasst wenigstens eine Brennstoffzelle (12) mit einem an einem Anoden-Einlassbereich (20) mit Wasserstoff enthaltendem Anodengas zu speisenden Anodenbereich (14), einem an einem Kathoden-Einlassbereich (24) mit Sauerstoff enthaltendem Kathodengas zu speisenden Kathodenbereich (16), einem Anoden-Auslassbereich (32) zur Abgabe von Anodenabgas und einem Kathoden-Auslassbereich (38) zur Abgabe von Kathodenabgas, sowie einen Pufferspeicher (48) zur Aufnahme von Anodenabgas von dem Anoden-Auslassbereich (32).

## Beschreibung

Die vorliegende Erfindung betrifft ein Brennstoffzellensystem, welches beispielsweise in einem elektrisch betriebenen Fahrzeug zur Erzeugung elektrischer Energie eingesetzt werden kann. Ein derartiges Brennstoffzellensystem umfasst wenigstens eine beispielsweise als Brennstoffzellenstapel ausgebildete Brennstoffzelle mit einem an einem Anoden-Einlassbereich mit Wasserstoff enthaltendem Anodengas zu speisenden Anodenbereich, einem an einem Kathoden-Einlassbereich mit Sauerstoff enthaltendem Kathodengas zu speisenden Kathodenbereich, einem Anoden-Auslassbereich zur Abgabe von Anodenabgas und einem Kathoden-Auslassbereich zur Abgabe von Kathodenabgas.

Die bei derartigen Brennstoffzellen den Anodenbereich vom Kathodenbereich trennende Membran weist im Allgemeinen eine Restpermeabilität für Stickstoff und Wasser auf, so dass im Brennstoffzellenbetrieb in dem beispielsweise durch Luft bereitgestellten Kathodengas enthaltener Stickstoff und im Kathodenbereich entstehendes oder in diesen eingeleitetes Wasser durch die Membran hindurch in den Anodenbereich diffundieren können. Das Ansammeln von Stickstoff und Wasser im Anodenbereich führt zu einer Verdünnung des in den Anodenbereich eingeleiteten Anodengases und beeinträchtigt daher die Effizienz der Brennstoffzelle.

Um diesem Problem zu begegnen, werden bei Brennstoffzellen wiederholt beispielsweise mit Intervallen von 20 Sekunden bis 2 Minuten als Purge-Vorgänge bezeichnete Anodenbereich-Spülvorgänge durchgeführt, bei welchen der Anodenbereich kurzfristig beispielsweise für eine Zeitdauer von 0,1 bis 1 Sekunde geöffnet wird. Aufgrund des im Anodenbereich im Allgemeinen vorhandenen Überdrucks beispielsweise im Bereich von 2 bis 3,5 bar erfolgt ein rasches Ausströmen des im Anodenbereich vorhandenen Gasgemisches, welches neben den durch Diffusion in den Anodenbereich gelangten Verunreinigungen auch einen hohen Anteil an molekularem Wasserstoff enthält. Wird ein derartiges Gasgemisch als Anodenabgas während eines Spülvorgangs zur Umgebung ausgestoßen und dabei mit in der Umgebungsluft enthaltenem Sauerstoff vermischt, besteht die Gefahr, dass die Zündungsgrenze überschritten wird und das Gemisch aus Wasserstoff und Sauerstoff zu brennen beginnt oder explodiert.

Um dies zu verhindern, kann auch das während eines Spülvorgangs von der Brennstoffzelle abgegebene Brennstoffzellenabgas durch eine Katalysatoreinheit geleitet werden, in welcher ein Gemisch aus Wasserstoff und Sauerstoff kontrolliert zur Reaktion gebracht wird. In Zeitintervallen zwischen zwei Spülvorgängen ist die Wasserstoffkonzentration im Brennstoffzellenabgas vergleichsweise gering, so dass grundsätzlich eine klein dimensionierte Katalysatoreinheit zum Bereitstellen einer ausreichenden Reaktionskapazität eingesetzt werden könnte. Während der Durchführung von Spülvorgängen steigt die Wasserstoffkonzentration und damit die zur Reaktion zu bringende Wasserstoffmenge stark an, was für eine ausreichende katalytische Umsetzung des ausgespülten Wasserstoffs eine für den normalen Betrieb eines Brennstoffzellensystems überdimensionierte Katalysatoreinheit erfordert.

Es ist die Aufgabe der vorliegenden Erfindung, ein Brennstoffzellensystem sowie ein Verfahren zum Betreiben eines derartigen Brennstoffzellensystems bereitzustellen, mit welchen die Abgabe von eine übermäßig hohe Wasserstoffkonzentration aufweisendem Brennstoffzellenabgas zur Umgebung zuverlässig vermieden werden kann.

Gemäß der vorliegenden Erfindung wird diese Aufgabe gelöst durch ein Brennstoffzellensystem, insbesondere für ein Fahrzeug, umfassend:
- wenigstens eine Brennstoffzelle mit einem an einem Anoden-Einlassbereich mit Wasserstoff enthaltendem Anodengas zu speisenden Anodenbereich, einem an einem Kathoden-Einlassbereich mit Sauerstoff enthaltendem Kathodengas zu speisenden Kathodenbereich, einem Anoden-Auslassbereich zur Abgabe von Anodenabgas und einem Kathoden-Auslassbereich zur Abgabe von Kathodenabgas,
- einen Anodenabgas-Pufferspeicher zur Aufnahme von Anodenabgas von dem Anoden-Auslassbereich.

Bei einem erfindungsgemäß aufgebauten Brennstoffzellensystem wird das bei einem Anodenbereich-Spülvorgang abgegebene Anodenabgas nicht direkt in eine beispielsweise eine Katalysatoreinheit enthaltende Abgasanlage geleitet bzw. zur Umgebung abgegeben, sondern wird in dem Pufferspeicher zwischengespeichert. Die Abgabe des bei einem Anodenbereich-Spülvorgang in den Pufferspeicher geleiteten Anodenabgases erfolgt mit zeitlicher Verzögerung bzw. über die Zeitdauer zwischen zwei Anodenbereich-Spülvorgängen gestreckt. Dies hat zur Folge, dass stromabwärts des Pufferspeichers die pro Zeiteinheit weitergeleitete Wasserstoffmenge deutlich gesenkt ist, was einerseits dazu führt, dass das Überschreiten der Zündgrenze vermieden werden kann bzw. bei Einsatz einer vergleichsweise klein dimensionierten Katalysatoreinheit eine im Wesentlichen vollständige katalytische Umsetzung des bei derartigen Anodenbereich-Spülvorgängen ausgespülten Wasserstoffs gewährleistet werden kann. Da eine derartige katalytische Reaktion dann über eine längere Zeitdauer nahezu kontinuierlich ablaufen kann, besteht nicht die Gefahr, dass die Katalysatoreinheit zwischen zwei Anodenbereich-Spülvorgängen auskühlt bzw. in übermäßigem Maße dem im Kathodenabgas enthaltenen Wasser ausgesetzt ist.

Um dem Pufferspeicher bei Durchführung von Anodenbereich-Spülvorgängen definiert und kontrolliert Anodenabgas zuführen zu können, kann der Pufferspeicher vermittels einer Pufferspeicher-Einlassleitung mit dem Anoden-Auslassbereich verbunden sein und kann der Pufferspeicher-Einlassleitung eine Pufferspeicher-Ventileinheit zum wahlweisen Freigeben der Pufferspeicher-Einlassleitung zur Zufuhr von Anodenabgas zu dem Pufferspeicher und Absperren der Pufferspeicher-Einlassleitung gegen Zufuhr von Anodenabgas zu dem Pufferspeicher zugeordnet sein.

Um auch im normalen Brennstoffzellenbetrieb das Ausstoßen von im Anodenbereich nicht vollständig umgesetztem Wasserstoff zu vermeiden, kann dem Anoden-Auslassbereich eine Anoden-Rückspeiseleitung zum Rückspeisen von Anodenabgas von dem Anoden-Auslassbereich zu dem Anoden-Einlassbereich zugeordnet sein.

Für eine baulich einfache Ausgestaltung kann dabei die Pufferspeicher-Einlassleitung in Verbindung mit der Anoden-Rückspeiseleitung sein. Beispielsweise kann die Pufferspeicher-Einlassleitung von der Anoden-Rückspeiseleitung abzweigen.

Zum Erhalt eines definierten Stroms von Kathodengas durch den Kathodenbereich bzw. auch zum Einstellen definierter Druckverhältnisse im Kathodenbereich kann dem Kathoden-Auslassbereich eine Kathoden-Auslassleitung zur Abgabe von Kathodenabgas zugeordnet sein und kann der Kathoden-Auslassleitung eine Kathoden-Ventileinheit zum wahlweisen Freigeben der Kathoden-Auslassleitung zur Abgabe von Kathodenabgas aus dem Kathoden-Auslassbereich und Absperren der Kathoden-Auslassleitung gegen Abgabe von Kathodenabgas aus dem Kathoden-Auslassbereich zugeordnet sein. Vermittels der Kathoden-Ventileinheit kann der Kathoden-Auslassbereich vorzugsweise nicht nur vollständig gegen die Abgabe von Kathodenabgas abgesperrt bzw. in maximalem Ausmaß für die Abgabe von Kathodenabgas freigegeben werden, sondern die Kathoden-Ventileinheit kann als Druckhalteventil eingesetzt werden, vermittels welchem auch in Anpassung an den Lastzustand der Brennstoffzelle durch definierte Einstellung der durch die Kathoden-Ventileinheit erzeugten Drosselwirkung der Druck im Kathodenbereich auf einen erforderlichen bzw. optimalen Druck reguliert werden kann.

Zur Abgabe des in den Pufferspeicher eingeleiteten Anodenabgases kann dem Pufferspeicher eine Pufferspeicher-Auslassleitung zur Abgabe von Anodenabgas aus dem Pufferspeicher zugeordnet sein und kann der Pufferspeicher-Auslassleitung eine Pufferspeicher-Drosseleinheit zur Drosselung des Anodenabgasstroms durch die Pufferspeicher-Auslassleitung zugeordnet sein.

Um die Abgabe von Anodenabgas aus dem Pufferspeicher beispielsweise an den Lastzustand der Brennstoffzelle anpassen zu können, wird vorgeschlagen, dass die Pufferspeicher-Drosseleinheit ein veränderbares Drosselverhalten aufweist.

Die Pufferspeicher-Auslassleitung kann beispielsweise in die Kathoden-Auslassleitung stromabwärts der Kathoden-Ventileinheit einmünden.

Um den im Brennstoffzellenbetrieb insbesondere bei Durchführung von Anodenbereich-Spülvorgängen abgegebenen Wasserstoff kontrolliert reaktiv umsetzen zu können und die dabei freigesetzte Wärme beispielsweise in einem Fahrzeug nutzen zu können, kann eine Katalysatoreinheit zur Aufnahme von Kathodenabgas von dem Kathoden-Auslassbereich oder/und Anodenabgas von dem Anoden-Auslassbereich vorgesehen sein.

Dabei kann die Kathoden-Auslassleitung stromabwärts der Kathoden-Ventileinheit in die Katalysatoreinheit einmünden und kann die Pufferspeicher-Auslassleitung stromaufwärts der Katalysatoreinheiten in die Kathoden-Auslassleitung einmünden.

Zur Beeinflussung der Druckverhältnisse in dem Kathodenbereich kann dem Kathodenbereich eine Kathoden-Bypassleitung zugeordnet sein und kann der Kathoden-Bypassleitung eine Bypass-Ventileinheit zum wahlweisen Freigeben der Kathoden-Bypassleitung zum Leiten von Kathodengas parallel zum Kathodenbereich und Absperren der Kathoden-Bypassleitung gegen Leiten von Kathodengas parallel zum Kathodenbereich zugeordnet sein.

Wenn dabei die Kathoden-Bypassleitung stromabwärts der Kathoden-Ventileinheit in die Kathoden-Auslassleitung einmündet, kann sowohl die Bypass-Ventileinheit, als auch die Kathoden-Ventileinheit genutzt werden, um im Kathodenbereich definierte Druckverhältnisse einzustellen.

Dem Kathoden-Einlassbereich kann eine Kathoden-Einlassleitung zum Leiten von Kathodengas zu dem Kathodenbereich zugeordnet sein, und dem Anodenbereich kann eine Anoden-Einlassleitung zum Leiten von Anodengas zu dem Anodenbereich zugeordnet sein.

Eine hinsichtlich der Menge und der Temperatur definierte Zufuhr von Kathodengas zum Kathodenbereich kann beispielsweise dadurch sichergestellt werden, dass der Kathoden-Einlassleitung eine Kathodengas-Fördereinheit zum Fördern von Kathodengas zu dem Kathodenbereich und eine Kathodengas-Heizeinheit zum Erwärmen von zu dem Kathodenbereich gefördertem Kathodengas zugeordnet sind.

Dabei ist es besonders vorteilhaft, wenn die Kathoden-Bypassleitung stromabwärts der Kathodengas-Heizeinheit von der Kathoden-Einlassleitung abzweigt. Somit ist es möglich, an der Kathodengas-Heizeinheit erwärmtes Kathodengas durch die Kathoden-Bypassleitung in eine stromabwärts folgende Katalysatoreinheit zu leiten und diese dadurch thermisch und auch hinsichtlich der Ablagerung von Wasser zu konditionieren.

Um das übermäßige Ansammeln von mit dem Anodenabgas aus dem Anodenbereich in den Pufferspeicher gespültem Wasser im Pufferspeicher zu vermeiden, kann dem Pufferspeicher eine Flüssigkeits-Auslassleitung zugeordnet sein und kann der Flüssigkeits-Auslassleitung eine Flüssigkeits-Ventileinheit zum wahlweisen Freigeben der Flüssigkeits-Auslassleitung zur Abgabe von Flüssigkeit aus dem Pufferspeicher und Absperren der Flüssigkeits-Auslassleitung gegen Abgabe von Flüssigkeit aus dem Pufferspeicher zugeordnet sein.

Die eingangs angeführte Aufgabe wird weiter gelöst durch ein Verfahren zum Betreiben eines erfindungsgemäß aufgebauten Brennstoffzellensystems, bei welchem Verfahren bei Durchführung eines Anodenbereich-Spülvorgangs von dem Anoden-Auslassbereich abgegebenes Anodenabgas in den Pufferspeicher geleitet wird.

Für eine gleichmäßige Abgabe des aus dem Anodenbereich ausgespülten Wasserstoffs wird vorgeschlagen, dass bei Durchführung eines Anodenbereich-Spülvorgangs das Drosselverhalten der Pufferspeicher-Drosseleinheit in Abhängigkeit von einem Lastzustand der Brennstoffzelle eingestellt wird.

Hierzu kann beispielsweise vorgesehen sein, dass das Drosselverhalten der Pufferspeicher-Drosseleinheit derart eingestellt wird, dass mit zunehmender Brennstoffzellenlast die Drosselwirkung der Pufferspeicher-Drosseleinheit abnimmt.

Durch das Ableiten von Anodenabgas aus dem Anodenbereich während eines Anodenbereich-Spülvorgangs sinkt der Gasdruck im Anodenbereich gegenüber dem im normalen Brennstoffzellenbetrieb vorhandenen Gasdruck deutlich ab. Um dabei eine durch eine übermäßig große Druckdifferenz zwischen dem Anodenbereich und dem Kathodenbereich hervorgerufene Überlastung der den Anodenbereich von Kathodenbereich trennenden Membran zu vermeiden, kann bei Durchführung eines Anodenbereich-Spülvorgangs ein Gasdruck im Kathodenbereich gesenkt werden.

Dabei kann zum Senken des Gasdrucks im Kathodenbereich die Kathoden-Ventileinheit in Richtung geringere Drosselwirkung verstellt werden, so dass der Gegendruck am Kathoden-Auslassbereich abnimmt und durch die Abgabe einer größeren Menge von Kathodenabgas der Druck im Kathodenbereich gesenkt werden kann.

Alternativ oder zusätzlich kann zum Senken des Gasdrucks im Kathodenbereich die Bypass-Ventileinheit zum Freigeben der Kathoden-Bypassleitung betrieben werden.

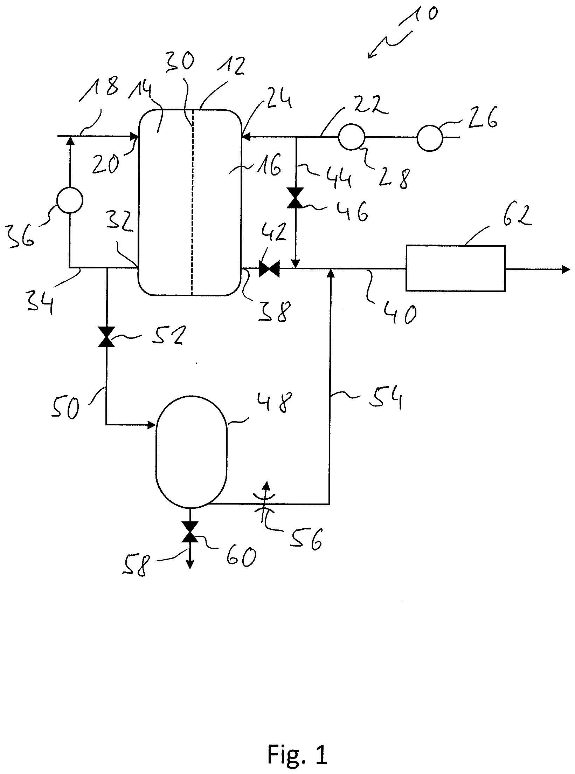

Die vorliegende Erfindung wird nachfolgend mit Bezug auf die Fig. 1 detailliert beschrieben, welche ein beispielsweise in einem Fahrzeug zur Erzeugung elektrischer Energie einsetzbares Brennstoffzellensystem in prinzipieller Darstellung zeigt.

In Fig. 1 ist ein beispielsweise in einem Fahrzeug zum Erzeugen elektrischer Energie einsetzbares Brennstoffzellensystem allgemein mit 10 bezeichnet. Das Brennstoffzellensystem 10 umfasst eine beispielsweise als Brennstoffzellenstapel ausgebildete Brennstoffzelle 12 mit einem Anodenbereich 14 und einem Kathodenbereich 16. Dem Anodenbereich 14 wird über eine Anoden-Einlassleitung 18 molekularer Wasserstoff oder ein diesen enthaltendes Gas als Anodengas zugeführt und in einem Anoden-Einlassbereich 20 in diesen eingeleitet. Beispielsweise kann der Wasserstoff bzw. das Anodengas aus einem Kryotank entnommen werden. Dem Kathodenbereich 16 wird über eine Kathoden-Einlassleitung 22 ein Sauerstoff als Oxidationsmittel enthaltendes Kathodengas zugeführt bzw. an einem Kathoden-Einlassbereich 24 in diesen eingeleitet. Beispielsweise kann als Kathodengas Luft verwendet werden, so dass der in der Luft enthaltene Luftsauerstoff in der Brennstoffzelle 12 als Oxidationsmittel genutzt werden kann. Es ist darauf hinzuweisen, dass die Verwendung von Sauerstoff nur beispielhaft steht für eine Vielzahl weiterer anderer Oxidationsmittel, die in einer Brennstoffzelle genutzt werden können, um durch Umsetzung mit Wasserstoff elektrische Energie zu erzeugen.

Der Kathoden-Einlassleitung 22 ist eine beispielsweise als Gebläse oder Kompressor ausgebildete Kathodengas-Fördereinheit 26 zugeordnet. Stromabwärts der Kathodengas-Fördereinheit 26 ist der Kathoden-Einlassleitung 22 eine Kathodengas-Heizeinheit 28 zugeordnet, in welcher das in Richtung zum Kathoden-Einlassbereich 24 geförderte Kathodengas beispielsweise durch Bestromung eines elektrisch erregbaren Heizorgans erwärmt werden kann.

Der Kathodenbereich 14 und der Anodenbereich 16 sind durch eine grundsätzlich für Protonen durchlässige Membran 30 voneinander getrennt.

Der Anodenbereich 14 weist einen Anoden-Auslassbereich 32 auf, an welchem Anodenabgas in eine Anoden-Rückspeiseleitung 34 abgegeben wird. Das in der Anoden-Rückspeiseleitung 34 aufgenommene Anodenabgas kann unter der Förderwirkung einer beispielsweise als Kompressor oder dergleichen ausgebildeten Anodenabgas-Fördereinheit 36 zu der Anoden-Einlassleitung 18 bzw. dem Anoden-Einlassbereich 20 zurückgespeist werden, so dass im Anodenabgas enthaltener Wasserstoff in den Brennstoffzellenbetrieb zurückgespeist werden kann.

Der Kathodenbereich 16 weist einen Kathoden-Auslassbereich 38 auf, an welchem Kathodenabgas in eine Kathoden-Auslassleitung 40 abgegeben wird. Der Kathoden-Auslassleitung 40 ist eine Kathoden-Ventileinheit 42 zugeordnet, durch welche der Kathoden-Auslassbereich 38 bzw. die Kathoden-Auslassleitung 40 gegen Durchströmung mit Kathodenabgas abgesperrt bzw. zur Durchströmung freigegeben werden kann. Die Kathoden-Ventileinheit 42 kann auch als Druckhalteventil genutzt werden, so dass durch Einstellen der Drosselwirkung der Kathoden-Ventileinheit 42 im Kathodenbereich 16 für den Brennstoffzellenbetrieb 12 optimale Druckverhältnisse eingestellt werden können. Die Kathoden-Ventileinheit 42 kann beispielsweise unter der Ansteuerung einer nicht dargestellten Ansteuereinheit stehen, welche auch andere anzusteuernde Systembereiche des Brennstoffzellensystems 10, wie z. B. die Fördereinheiten 26, 36 und die Kathodengas-Heizeinheit 28 im Brennstoffzellenbetrieb ansteuern kann.

Dem Kathodenbereich 16 ist ferner eine Kathoden-Bypassleitung 44 mit einer Bypass-Ventileinheit 46 zugeordnet. Durch die Kathoden-Bypassleitung 44 kann bei geöffneter Bypass-Ventileinheit 46 zumindest ein Teil des in Richtung zum Kathodenbereich 16 geförderten Kathodengases parallel zum Kathodenbereich 16 geleitet werden und in Richtung zur Kathoden-Auslassleitung 40 strömen. Bei in eine Schließstellung gestellter Bypass-Ventileinheit 46 ist die Kathoden-Bypassleitung 44 gegen die Durchströmung mit Kathodengas abgesperrt, so dass das ganze von der Kathodengas-Fördereinheit 26 geförderte Kathodengas im Bereich des Kathoden-Einlassbereichs 24 in den Kathodenbereich 16 einströmt.

Das Brennstoffzellensystem 10 umfasst ferner einen Pufferspeicher 48 für aus dem Anodenbereich 14 abgegebenes Anodenabgas. Dem Pufferspeicher 48 ist eine Pufferspeicher-Einlassleitung 50 zugeordnet, welche in Verbindung mit der Anoden-Rückspeiseleitung 34 steht und beispielsweise von dieser stromabwärts des Anoden-Auslassbereichs 32 abzweigt.

Der Pufferspeicher-Einlassleitung 50 ist eine Pufferspeicher-Ventileinheit 52 zugeordnet, durch welche die Pufferspeicher-Einlassleitung 50 gegen Durchströmung mit Anodenabgas absperrbar ist und die Pufferspeicher-Einlassleitung 50 bei der Durchführung vom Anodenbereich-Spülvorgängen zum Leiten von Anodenabgas in Richtung zu dem Pufferspeicher 48 freigegeben werden kann.

Dem Pufferspeicher 48 ist ferner eine Pufferspeicher-Auslassleitung 54 zugeordnet, welche von dem Pufferspeicher 48 zu der Kathoden-Auslassleitung 40 führt und in diese stromabwärts der Kathoden-Ventileinheit 42, beispielsweise auch stromabwärts der Einmündung der Kathoden-Bypassleitung 44, einmündet.

Der Pufferspeicher-Auslassleitung 54 ist eine beispielsweise in Form einer Blende ausgebildete Pufferspeicher-Drosseleinheit 56 zugeordnet, welche den Strom von im Pufferspeicher 48 aufgenommenem bzw. zwischengespeichertem Anodenabgas drosselt und somit zu einer Verzögerung bei der Abgabe von bei Durchführung eines Anodenbereich-Spülvorgangs im Pufferspeicher 48 aufgenommenem Anodenabgas führt. Vorteilhafterweise ist die Pufferspeicher-Drosseleinheit 56 eine variable Drosseleinheit, deren Drosselverhalten, also Strömungswiderstand, veränderbar ist. Die Pufferspeicher-Drosseleinheit 56 kann auch dazu genutzt werden, die Pufferspeicher-Auslassleitung 54 vollständig gegen die Abgabe von Anodenabgas aus dem Pufferspeicher 48 abzusperren. Ebenso wie die anderen im Brennstoffzellenbetrieb hinsichtlich ihres Betriebszustandes variierbaren Systembereiche, wie z. B. die verschiedenen Ventileinheiten 42, 46, 52, die Fördereinheiten 26, 36 und die Kathodengas-Heizeinheit 28 kann auch die Pufferspeicher-Drosseleinheit 56 unter der Ansteuerung einer Ansteuereinheit des Brennstoffzellensystems 10 stehen.

Dem Pufferspeicher 48 ist ferner eine Flüssigkeits-Auslassleitung 58 zugeordnet. Mit dem Anodenabgas aus dem Anodenbereich 14 ausgetragenes und im Pufferspeicher 48 sich ansammelndes Wasser kann sich in einem unteren Bereich des Pufferspeichers 48 sammeln und über die Flüssigkeits-Auslassleitung 58 abgegeben werden. Der Flüssigkeits-Auslassleitung 58 kann eine Flüssigkeits-Ventileinheit 60 zugeordnet sein, welche dann, wenn im Pufferspeicher 48 eine beispielsweise vorbestimmte Menge an Wasser angesammelt wurde, öffnen kann oder geöffnet werden kann, um dieses Wasser abzuleiten und somit ein Austragen von Wasser aus dem Pufferspeicher 48 über die Pufferspeicher-Auslassleitung 54 zu verhindern. Auch die Flüssigkeits-Ventileinheit 60 steht unter der Ansteuerung der Ansteuereinheit. Alternativ kann die Flüssigkeits-Ventileinheit eine beispielsweise durch einen Schwimmer gesteuerte passive Ventileinheit sein, welche dann öffnet, wenn ein definierter Flüssigkeitsstand im Pufferspeicher 48 erreicht ist. Das aus dem Pufferspeicher 48 über die Flüssigkeits-Auslassleitung 58 abgeleitete Wasser kann beispielsweise zur Umgebung abgegeben werden oder kann alternativ auch in den Brennstoffzellenprozess zurückgespeist werden.

Stromabwärts der Einmündung der Pufferspeicher-Auslassleitung 54 in die Kathoden-Auslassleitung 40 ist eine Katalysatoreinheit 62 vorgesehen. In der Katalysatoreinheit 62 kann unter Durchführung einer katalytischen Reaktion Wasserstoff mit Sauerstoff zu Wasser reagieret werden, so dass das Ausstoßen von molekularem Wasserstoff zur Umgebung weitestgehend verhindert werden kann.

Im normalen Brennstoffzellenbetrieb wird dem Anodenbereich 14 Wasserstoff zugeführt und wird dem Kathodenbereich 16 Sauerstoff zugeführt. In einer elektrochemischen Reaktion entsteht dabei unter Erzeugung elektrischer Energie im Kathodenbereich Wasser, welches zusammen mit dem in der als Kathodengas dem Kathodenbereich 16 zugeführte Luft enthaltenen Stickstoff am Kathoden-Auslassbereich 38 in die Kathoden-Auslassleitung 40 abgegeben wird.

Da ein Teil des im Kathodenbereich 16 entstehenden oder in diesen eingeleiteten Wassers und auch ein Teil des Stickstoffs durch die Membran 30 hindurch in den Anodenbereich 14 diffundieren kann, werden wiederholt Anodenbereich-Spülvorgänge, auch als Purge-Vorgänge bezeichnet, durchgeführt, in welchen durch Öffnen der Pufferspeicher-Ventileinheit 52 kurzzeitig das bzw. ein Großteil des Anodenabgases in Richtung zum Pufferspeicher 48 geleitet wird. Durch die zwischen dem Anodenbereich 14 und der Umgebung bzw. auch dem Druckspeicher 48 bestehende Druckdifferenz erfolgt in einer vergleichsweise kurzen Zeitdauer von 0,1 bis 1 Sekunde ein effizienter Austrag der im Anodenbereich 14 sich ansammelnden Verunreinigungen. Diese werden zusammen mit in den Anodenbereich 14 eingespeistem Wasserstoff über die Pufferspeicher-Einlassleitung 50 in den Pufferspeicher 48 geleitet.

Das einen hohen Anteil an molekularem Wasserstoff enthaltende Anodenabgas wird bei Durchführung eines derartigen Anodenbereich-Spülvorgangs im Pufferspeicher 48 zwischengespeichert und durch die Drosselwirkung der Pufferspeicher-Drosseleinheit 56 mit zeitlicher Verzögerung über die Pufferspeicher-Auslassleitung 54 in die Kathoden-Auslassleitung 40 und über diese in die Katalysatoreinheit 62 geleitet. Die Abgabe von Wasserstoff in die Katalysatoreinheit 62 erfolgt daher nicht in zur Durchführung der Anodenbereich-Spülvorgänge im Wesentlichen synchroner, stoßartiger Weise, sondern durch die Pufferwirkung des Pufferspeichers 48 in geglätteter Weise, so dass das Entstehen von Konzentrationsspitzen bzw. Mengenspitzen von molekularem Wasserstoff stromabwärts des Pufferspeichers 48 und insbesondere im Bereich der Katalysatoreinheit 62 verhindert wird. Es ist daher nicht erforderlich, die Katalysatoreinheit 62 übermäßig groß zu dimensionieren, um auf diese Weise sicherzustellen, dass eine vollständige Oxidation des Wasserstoffs erfolgen kann.

Aufgrund der verzögerten, geglätteten Abgabe von Wasserstoff in Richtung zur Katalysatoreinheit 62 arbeitet diese auch in den Intervallen zwischen zwei aufeinander folgenden Anodenbereich-Spülvorgängen in einem nahezu kontinuierlichen Prozess, so dass ein Auskühlen der Katalysatoreinheit und auch eine übermäßige Ansammlung von aus dem Kathodenbereich 16 abgegebenem Wasser in der Katalysatoreinheit 62 vermieden werden können.

Die Drosselwirkung der Pufferspeicher-Drosseleinheit 56 kann in Anpassung an den Lastzustand der Brennstoffzelle 12 so eingestellt werden, dass für jeden Lastzustand bzw. im Wesentlichen unabhängig vom Lastzustand der Brennstoffzelle 12 gewährleistet ist, dass das bei einem Anodenbereich-Spülvorgang in den Pufferspeicher 48 eingeleitete Anodenabgas bis zur Durchführung des nächsten Anodenbereich-Spülvorgangs im Wesentlichen vollständig aus dem Pufferspeicher 48 abgegeben werden kann. Dies bedeutet, dass dann, wenn bei höherer Brennstoffzellenlast eine größere Menge von Wasserstoff in den Anodenbereich 14 eingeleitet wird und dementsprechend bei Durchführung eines Anodenbereich-Spülvorgangs eine größere Menge an Anodenabgas in Richtung zum Pufferspeicher 48 geleitet wird, die Drosselwirkung der Pufferspeicher-Drosseleinheit 56 gesenkt werden kann, um zu gewährleisten, dass diese Menge an Anodenabgas bis zum nächsten durchzuführenden Anodenbereich-Spülvorgang im Wesentlichen vollständig in Richtung zur Katalysatoreinheit 62 abgegeben werden kann. Wird bei geringer Brennstoffzellenlast und entsprechend geringerer in den Anodenbereich 14 eingeleiteter Wasserstoffmenge bei Durchführung eines Anodenbereich-Spülvorgangs auch eine geringere Menge an Anodenabgas in den Pufferspeicher 48 eingeleitet, kann die Drosselwirkung der Pufferspeicher-Drosseleinheit 56 erhöht werden, so dass gleichermaßen eine im Wesentlichen kontinuierliche Abgabe dieser geringeren Menge an Anodenabgas zur Katalysatoreinheit 62 während des nachfolgenden Betriebsintervalls der Brennstoffzelle 12 gewährleistet ist.

Beim Öffnen der Pufferspeicher-Ventileinheit 52 zur Durchführung von Anodenbereich-Spülvorgängen nimmt der Druck im Anodenbereich 14 spontan ab. Um eine durch eine übermäßig große Druckdifferenz zwischen dem Anodenbereich 14 und dem Kathodenbereich 16 hervorgerufene Beschädigung der Membran 30 zu vermeiden, ist es vorteilhaft, wenn in Anpassung an den gesenkten Gasdruck im Anodenbereich 14 während der Durchführung eines Anodenbereich-Spülvorgangs auch der Gasdruck im Kathodenbereich 16 gesenkt wird. Hierzu kann beispielsweise die Drosselwirkung der als Druckhalteventil betriebenen Kathoden-Ventileinheit 42 gesenkt werden, so dass ein geringerer Strömungswiderstand am Kathoden-Auslassbereich 38 eine entsprechende Druckabnahme im Kathodenbereich 16 zur Folge hat. Alternativ oder zusätzlich kann durch Öffnen der Bypass-Ventileinheit 46 zumindest ein Teil des Kathodengases parallel zum Kathodenbereich 16, also an diesem vorbei, in die Kathoden-Auslassleitung 40 geleitet werden. Wird dabei auch die Kathodengas-Heizeinheit 28 betrieben, kann gleichzeitig dafür gesorgt werden, dass durch Zuführen von vergleichsweise warmem Kathodengas, also vergleichsweise warmer Luft, die Katalysatoreinheit 62 thermisch konditioniert wird bzw. in der Katalysatoreinheit 62 sich ansammelnde Feuchtigkeit ausgetragen wird, wodurch die Gefahr der hydrothermalen Alterung verringert wird. Um diesen Effekt maximal zu nutzen, ist es beispielsweise möglich, die Kathoden-Ventileinheit 42 in ihre die Kathoden-Auslassleitung 40 vollständig absperrende Stellung zu bringen, so dass die gesamte durch die Kathodengas-Fördereinheit 26 in Richtung zum Kathoden-Einlassbereich 24 als Kathodengas geförderte Luft durch die Kathoden-Bypassleitung 44 zusammen mit dem aus dem Pufferspeicher 48 abgegebenen Anodenabgas in Richtung zur Katalysatoreinheit 62 strömt.

Bei dem Brennstoffzellensystem 10 sind der Pufferspeicher 48 hinsichtlich seines Speichervolumens, die Pufferspeicher-Ventileinheit 52 hinsichtlich ihrer Drosselwirkung und die Pufferspeicher-Drosseleinheit 56 hinsichtlich ihrer Drosselwirkung derart aufeinander abgestimmt, dass bei Durchführung eines Anodenbereich-Spülvorgangs beim Öffnen der Pufferspeicher-Ventileinheit 52 durch den spontan auftretenden Druckabfall am Anoden-Auslassbereich 32 eine derartige Beschleunigung der im Anodenbereich 14 enthaltenen Wassertröpfchen erfolgt, dass diese im Wesentlichen vollständig aus dem Anodenbereich 14 ausgetragen werden. Gleichzeitig muss das Volumen des Pufferspeichers 48 so bemessen sein, dass beim Einströmen von Anodenabgas in den Pufferspeicher 48 insbesondere am Beginn eines derartigen Anodenbereich-Spülvorgangs eine ausreichende Druckdifferenz aufrechterhalten bleibt, um das Austragen von Wasser bzw. Wassertröpfchen aus dem Anodenbereich 14 zu gewährleisten. Weiter muss der vorzugsweise variable Strömungsquerschnitt des Pufferspeicher-Drosselventils 56 so dimensioniert sein bzw. eingestellt werden, dass gewährleistet ist, dass in einem Betriebsintervall der Brennstoffzelle 12 zwischen zwei unmittelbar aufeinander folgenden Anodenbereich-Spülvorgängen im Wesentlichen das ganze zuvor im Pufferspeicher 48 aufgenommene Anodenabgas über die Pufferspeicher-Auslassleitung 54 abgegeben werden kann. Die Drosselwirkung der Pufferspeicher-Drosseleinheit 56 kann dabei vorteilhafterweise auch abgestimmt sein auf die Ansteuerung der Bypass-Ventileinheit 46, um auch dadurch einerseits die Druckverhältnisse im Bereich der Brennstoffzelle 12 in der gewünschten Art und Weise beeinflussen zu können und andererseits zu gewährleisten, dass der gesamte über die Pufferspeicher-Auslassleitung 54 zur Katalysatoreinheit 62 geleitete Wasserstoff mit im Kathodengas transportiertem Sauerstoffkatalytisch umgesetzt werden kann.

Weiter kann die Flüssigkeits-Ventileinheit 60 derart auf den Betrieb der Brennstoffzelle 12 bzw. die Durchführung der Anodenbereich-Spülvorgänge abgestimmt sein, dass gewährleistet ist, dass im Pufferspeicher 48 sich ansammelndes Wasser dann abgegeben wird, wenn der Druck im Inneren des Pufferspeichers 48 bereits deutlich abgefallen ist. Da zu diesem Zeitpunkt der Durchfluss von Anodengas bereits reduziert ist, wird die Gefahr, dass aus dem Pufferspeicher 48 Wassertröpfchen in Richtung zur Katalysatoreinheit 62 getragen werden, gemindert. Gleichzeitig sorgt die Vergleichmäßigung des Stroms von Anodenabgas zu der Katalysatoreinheit 62 dafür, dass Phasen mit übermäßig hoher Strömungsgeschwindigkeit des Anodenabgases vermieden werden, so dass das in die Katalysatoreinheit 62 eingeleitete Anodenabgas auch bei vergleichsweise klein dimensionierter Katalysatoreinheit 62 eine ausreichend lange Verweildauer in der Katalysatoreinheit 62 aufweist und eine im Wesentlichen vollständige katalytische Umsetzung erreicht werden kann.

## Patentansprüche

1. Brennstoffzellensystem, insbesondere für ein Fahrzeug, umfassend:
- wenigstens eine Brennstoffzelle (12) mit einem an einem Anoden-Einlassbereich (20) mit Wasserstoff enthaltendem Anodengas zu speisenden Anodenbereich (14), einem an einem Kathoden-Einlassbereich (24) mit Sauerstoff enthaltendem Kathodengas zu speisenden Kathodenbereich (16), einem Anoden-Auslassbereich (32) zur Abgabe von Anodenabgas und einem Kathoden-Auslassbereich (38) zur Abgabe von Kathodenabgas,
- einen Pufferspeicher (48) zur Aufnahme von Anodenabgas von dem Anoden-Auslassbereich (32).

2. Brennstoffzellensystem nach Anspruch 1,
**dadurch gekennzeichnet,**
- **dass** der Pufferspeicher (48) vermittels einer Pufferspeicher-Einlassleitung (50) mit dem Anoden-Auslassbereich (32) verbunden ist, und dass der Pufferspeicher-Einlassleitung (50) eine Pufferspeicher-Ventileinheit (52) zum wahlweisen Freigeben der Pufferspeicher-Einlassleitung (50) zur Zufuhr von Anodenabgas zu dem Pufferspeicher (48) und Absperren der Pufferspeicher-Einlassleitung (50) gegen Zufuhr von Anodenabgas zu dem Pufferspeicher (48) zugeordnet ist,
oder/und
- **dass** dem Anoden-Auslassbereich (32) eine Anoden-Rückspeiseleitung (34) zum Rückspeisen von Anodenabgas von dem Anoden-Auslassbereich (32) zu dem Anoden-Einlassbereich (20) zugeordnet ist, vorzugsweise wobei die Pufferspeicher-Einlassleitung (50) in Verbindung mit der Anoden-Rückspeiseleitung (34) ist.

3. Brennstoffzellensystem nach Anspruch 1 oder 2,
**dadurch gekennzeichnet, dass** dem Kathoden-Auslassbereich (38) eine Kathoden-Auslassleitung (40) zur Abgabe von Kathodenabgas zugeordnet ist, und dass der Kathoden-Auslassleitung (40) eine Kathoden-Ventileinheit (42) zum wahlweisen Freigeben der Kathoden-Auslassleitung (40) zur Abgabe von Kathodenabgas aus dem Kathoden-Auslassbereich (38) und Absperren der Kathoden-Auslassleitung (40) gegen Abgabe von Kathodenabgas aus dem Kathoden-Auslassbereich (38) zugeordnet ist.

4. Brennstoffzellensystem nach einem der Ansprüche 1-3,
**dadurch gekennzeichnet, dass** dem Pufferspeicher (48) eine Pufferspeicher-Auslassleitung (54) zur Abgabe von Anodenabgas aus dem Pufferspeicher (48) zugeordnet ist, und dass der Pufferspeicher-Auslassleitung (54) eine Pufferspeicher-Drosseleinheit (56) zur Drosselung des Anodenabgasstroms durch die Pufferspeicher-Auslassleitung (54) zugeordnet ist,
vorzugsweise wobei die Pufferspeicher-Drosseleinheit (56) ein veränderbares Drosselverhalten aufweist.

5. Brennstoffzellensystem nach Anspruch 3 und Anspruch 4,
**dadurch gekennzeichnet, dass** die Pufferspeicher-Auslassleitung (54) in die Kathoden-Auslassleitung (40) stromabwärts der Kathoden-Ventileinheit (42) einmündet.

6. Brennstoffzellensystem nach einem der Ansprüche 1-5,
**dadurch gekennzeichnet, dass** eine Katalysatoreinheit (62) vorgesehen ist zur Aufnahme von Kathodenabgas von dem Kathoden-Auslassbereich (38) oder/und Anodenabgas von dem Anoden-Auslassbereich (32).

7. Brennstoffzellensystem nach Anspruch 6, sofern auf Anspruch 3 rückbezogen, **dadurch gekennzeichnet, dass** die Kathoden-Auslassleitung (40) stromabwärts der Kathoden-Ventileinheit (42) in die Katalysatoreinheit (62) einmündet.

8. Brennstoffzellensystem nach Anspruch 7, sofern auf Anspruch 5 rückbezogen **dadurch gekennzeichnet, dass** die Pufferspeicher-Auslassleitung (54) stromaufwärts der Katalysatoreinheit (62) in die Kathoden-Auslassleitung (40) einmündet.

9. Brennstoffzellensystem nach einem der Ansprüche 1-8,
**dadurch gekennzeichnet, dass** dem Kathodenbereich (16) eine Kathoden-Bypassleitung (44) zugeordnet ist, und dass der Kathoden-Bypassleitung (44) eine Bypass-Ventileinheit (46) zum wahlweisen Freigeben der Kathoden-Bypassleitung (44) zum Leiten von Kathodengas parallel zum Kathodenbereich (16) und Absperren der Kathoden-Bypassleitung (44) gegen Leiten von Kathodengas parallel zum Kathodenbereich (16) zugeordnet ist.

10. Brennstoffzellensystem nach Anspruch 9, sofern auf Anspruch 3 rückbezogen, **dadurch gekennzeichnet, dass** die Kathoden-Bypassleitung (44) stromabwärts der Kathoden-Ventileinheit (42) in die Kathoden-Auslassleitung (40) einmündet.

11. Brennstoffzellensystem nach einem der Ansprüche 1-10,
**dadurch gekennzeichnet, dass** dem Kathoden-Einlassbereich (24) eine Kathoden-Einlassleitung (22) zum Leiten von Kathodengas zu dem Kathodenbereich (16) zugeordnet ist, und dass dem Anodenbereich (14) eine Anoden-Einlassleitung (18) zum Leiten von Anodengas zu dem Anodenbereich (14) zugeordnet ist,
vorzugsweise wobei der Kathoden-Einlassleitung (22) eine Kathodengas-Fördereinheit (26) zum Fördern von Kathodengas zu dem Kathodenbereich (16) und eine Kathodengas-Heizeinheit (28) zum Erwärmen von zu dem Kathodenbereich (16) gefördertem Kathodengas zugeordnet sind.

12. Brennstoffzellensystem nach Anspruch 11, sofern auf Anspruch 9 rückbezogen,
**dadurch gekennzeichnet, dass** die Kathoden-Bypassleitung (44) stromabwärts der Kathodengas-Heizeinheit (28) von der Kathoden-Einlassleitung (22) abzweigt.

13. Brennstoffzellensystem nach einem der Ansprüche 1-12,
**dadurch gekennzeichnet, dass** dem Pufferspeicher (48) eine Flüssigkeits-Auslassleitung (58) zugeordnet ist, und dass der Flüssigkeits-Auslassleitung (58) eine Flüssigkeits-Ventileinheit (60) zum wahlweisen Freigeben der Flüssigkeits-Auslassleitung (58) zur Abgabe von Flüssigkeit aus dem Pufferspeicher (48) und Absperren der Flüssigkeits-Auslassleitung (58) gegen Abgabe von Flüssigkeit aus dem Pufferspeicher (48) zugeordnet ist.

14. Verfahren zum Betreiben eines Brennstoffzellensystems (10) nach einem der Ansprüche 1-13, bei welchem Verfahren bei Durchführung eines Anodenbereich-Spülvorgangs von dem Anoden-Auslassbereich (32) abgegebenes Anodenabgas in den Pufferspeicher (48) geleitet wird.

15. Verfahren nach Anspruch 14 in Verbindung mit Anspruch 4,
**dadurch gekennzeichnet, dass** bei Durchführung eines Anodenbereich-Spülvorgangs das Drosselverhalten der Pufferspeicher-Drosseleinheit (56) in Abhängigkeit von einem Lastzustand der Brennstoffzelle (12) eingestellt wird, vorzugsweise wobei das Drosselverhalten der Pufferspeicher-Drosseleinheit (56) derart eingestellt wird, dass mit zunehmender Brennstoffzellenlast die Drosselwirkung der Pufferspeicher-Drosseleinheit (56) abnimmt.

16. Verfahren nach Anspruch 14 oder 15,
**dadurch gekennzeichnet, dass** bei Durchführung eines Anodenbereich-Spülvorgangs ein Gasdruck im Kathodenbereich (16) gesenkt wird.

17. Brennstoffzellensystem nach Anspruch 16 in Verbindung mit Anspruch 3,
**dadurch gekennzeichnet, dass** zum Senken des Gasdrucks im Kathodenbereich (16) die Kathoden-Ventileinheit (42) in Richtung geringere Drosselwirkung verstellt wird.

18. Verfahren nach Anspruch 16 oder 17 in Verbindung mit Anspruch 9,
**dadurch gekennzeichnet, dass** zum Senken des Gasdrucks im Kathodenbereich (16) die Bypass-Ventileinheit (46) zum Freigeben der Kathoden-Bypassleitung (44) betrieben wird.
